# EUROPEAN PATENT APPLICATION

(11) **EP 2 168 930 A1**
(43) Date of publication of application: **31.03.2010**
(21) Application number: 07765856.5
(22) Date of filing: 10.05.2007
(51) Int. Cl.: C04B 7/00

(54) **VITREOUS MATERIAL WITH CEMENTING PROPERTIES AND METHOD FOR MANUFACTURE OF SAME**

(71) Applicant: CEMENTOS PORTLAND VADERRIVAS, S.A, 31002 Pamplona Navarra (ES)
(72) Inventor: LIZARRAGA GALARZA, Serafin, 20018 Donostia (ES)
(74) Representative: Gonzalez-Alberto Rodriguez, Natalia
(86) International application number: PCT/ES2007/000273
(87) International publication number: WO 2008/139001

(57) **Abstract**

The present invention relates to a vitreous material with hardening properties as well as to the process for manufacturing same, derived from the melting at high temperature of materials with a certain chemical composition containing calcium, magnesium, silica, aluminium and iron, either in the form of oxides, carbonate or other compounds, and the subsequent cooling of the material preventing its crystallization due to its internal viscosity and to the quick cooling. After this process, the material acquires a vitreous state which, finely ground and mixed with Portland clinker and/or gypsum, and/or calcium hydroxide or cements, has hardening or hydraulic properties, i.e., the material hardens when it mixed with water, acquiring mechanical properties.

## Description

### Field of the Art

The present invention relates to a vitreous material with hydraulic or hardening properties, i.e. a material which hardens upon mixing it with water, acquiring mechanical properties, as well as a process for manufacturing said material.

The material object of the present invention has as an application the manufacture of cement as a component thereof.

### Prior State of the Art

Blast furnace slag which is obtained as waste in the siderurgical industry is used in the current state of the art for manufacturing cement. Prior to its use as a cement component, it is necessary to check if the slag fulfills specific minimum requirements mainly as regards its chemical composition in order to be able to be used in the manufacture of cements.

Said slag has generally been used by being ground together with Portland clinker and gypsum for preparing cements although they can also be mixed in concrete with the cement and the aggregates.

When said slag is not a product, but rather waste, its chemical composition and vitreous characteristics are not the most suitable for obtaining cement with certain characteristics, in fact the characteristics of the cement are partially determined by the composition of the slag, thus preventing the manufacture of cements as a construction material with certain characteristics.

In addition, and as has already been mentioned, the use of slag does not allow controlling the final composition of the manufactured cement given that said slag has a chemical composition determined by the siderurgical process which it comes from, it can therefore not be modified, whereby the manufacture of cements is limited to cement for construction with the characteristics imposed by the slag used.

The product object of this invention has important advantages in the mechanical properties of the cements obtained with regard to those obtained starting from blast furnace slag.

### Summary of the Invention

The present invention consists of a vitreous material with hardening properties as well as the process for manufacturing same, derived from the melting at a high temperature of materials with a certain chemical composition containing calcium, magnesium, silica, aluminum and iron, either in the form of oxides, carbonates or other compounds, and the subsequent quick cooling of the material preventing its crystallization as a result of its internal viscosity and of the quick cooling.

After this process, the material acquires a vitreous state which, finely ground and mixed with Portland clinker and/or gypsum, and/or calcium hydroxide or cements, has hardening or hydraulic properties, i.e. the material hardens upon mixing it with water, acquiring mechanical properties.

The present invention provides a material to be used as a component in the manufacture of cements for construction contributing to the emission of a smaller amount of greenhouse gases than in the currently used processes for manufacturing cements due to the fact that in their chemical composition the percentage of CaO is less than that of Portland cement clinker and their mechanical properties are superior.

In addition, this new material allows manufacturing new cements which cannot be manufactured currently and with the existing materials, as products are obtained with a chemical and physical composition which does not currently exist.

Other problems solved by the present invention, and which are not solved in the state of the art, are:
- enabling countries and geographic areas which do not have suitable materials for manufacturing cements with the current techniques to manufacture it with the products object of this invention. Certain geographic areas of the planet do not have a chemical composition suitable for manufacturing Portland cement clinker; therefore they are rejected as possible locations for cement factories. Examples of the above are areas with low contents of CaO or high contents of MgO (greater than 6% for example) or high contents of Na₂O or K₂O (greater than 1.5% expressed in Na₂O equivalent) etc. whereby they require,bringing cement from other areas or from different continents. This currently occurs with greater frequency due to greater cement consumption in the world. With the product object of this patent many of these rejected materials can be used as raw materials.
- It also allows the recovery of waste such as metallurgy slag and other waste with a possible freeing up of the ground occupied by its waste dumps since in most cases it does not have a chemical composition suitable for manufacturing Portland clinker, as has been previously explained, but it does for manufacturing the products object of this invention.

The solution to the previous problems is based on manufacturing a vitreous material with hardening properties. In order to achieve the chemical composition of the vitreous material, different raw materials are mixed and ground which, upon melting and part of the volatile chemical compounds being evaporated, achieve a chemical composition as described below. These raw materials are fed into a furnace and are completely melted at high temperatures generally greater than 1000°C, preferably between 1250 and 1600°C in oxidizing conditions (or only slightly reducing conditions), using pulverized coal, coke, fuel oil and/or fuels considered to be alternatives in the cement industry, such as used tires, oils, solvents, plastics, etc. as a fuel.

Said molten material is quickly cooled to a temperature ensuring the minimum vitrification demanded from the product object of this patent. The cooling rate is the cooling rate between the temperature at which the liquid solidifies (normally greater than 1000°C) and the temperature ensuring that crystallization of the solid state is no longer possible and which must be less than 400°C in order to have the maximum assurance. The best results are obtained with cooling rates greater than 60°C/minute and are carried out with water although in some cases due to the chemical composition, lower rates and coolings carried out in the air also allow obtaining good products because of a high internal viscosity of the material which prevents its crystallization.

In the furnace, the cooling by water or by air must be quick enough, as has been previously described, so that the vitreous phase percentage is greater than 65%, with optimal values greater than 90%. It can generally be considered that the non-vitreous product part behaves as an inert material for the purpose of hardening properties with the economic and environmental consequences involved due to a lack of maximum performance in a thermal process.

The chemical composition of the raw materials must be such that after the processes in the furnace, the product has a chemical composition as described:
- A content of calcium, silicon, magnesium and aluminum which, expressed as oxides CaO, MgO, SiO₂, Al₂O₃, their sum is greater than 70% the rest being SO₃, Na₂O, K₂O, Fe₂O₃ and small amounts of other elements.
- The ratio (CaO+MgO)/SiO₂ is greater than 0.9, the values of the order between 1.3 and 1.6 being considered optimal from the technical-economical point of view, since they give the best mechanical properties with materials melting at a relatively low temperature
- The content of Al₂O₃ greater than 2% since this compound reacts with the calcium hydroxide of Portland cement clinker forming calcium aluminates, contributing in their hydration and in creating a microstructure providing high mechanical properties.
- The content of Na₂O equivalent (Na₂O+0.658*K₂O) with a range from 0% to 8%. These contents of alkalines can be a consequence of their presence in the raw materials or can be doped for the purpose of reducing the melting point temperature and the tendency of the material for vitrification. Its optimal value depends on the rest of the chemical composition, on whether or not calcium fluoride is used, but the optimal values are always within the indicated range.
- The content of SO₃ with a range from 0% to 20%. The percentage of this compound can come from the raw materials used or from the fuel itself. Its percentage in many cases and if there is a technical and economical possibility of using calcium sulfates, an increase of its percentage involves a supply of CaO without CO₂ emission. With SO₃ percentages greater than 20%, the properties of product decrease considerably.

Alkaline compounds and sulfates aid in melting and improve the subsequent reactivity of the vitreous material with hardening properties by internal alkaline and sulfate activation, an innovative concept of this patent. Although alkaline and sulfate activation is a known technique for activating blast furnace slag and fly ash, it has always been carried out by mixing the slag or fly ash with alkaline and sulfate activating agents, not forming part of their chemical composition as in this case of internal activation facilitating chemical reactions, their yield considerably increasing.

The addition of flux agents such as calcium fluoride with optimal percentages of 0.35% considerably decreases the melting point of the described chemical compositions.

By means of the previous compositions, it is possible to obtain a material for manufacturing cements which allows controlling the characteristics of the manufactured cement and improving them, allowing the manufacture of new cements.

For example, when the intention is for the material object of the present invention to be aimed at white cements, the content of iron, manganese, chromium, and other chromophore elements must be reduced as much as possible and always under 0.5% as a sum of all of them.

However, when the vitreous material with hardening properties is aimed at colored cements, metal compounds and their mixtures will be chosen to achieve the desired color, small amounts of reduced iron will give the vitreous material with hardening properties a green color, larger amounts of iron and with a higher oxidation level will give a brownish gray color and variable content of copper will give blue colors, etc. In other words, the vitreous material with hardening properties will be doped with chromophore metals to achieve the required tonality.

Therefore, a first object of the present invention relates to a vitreous material with hardening properties for manufacturing cements for construction which allows, due to its composition, manufacturing new cements and prevents the use of blast furnace slag, improving the mechanical properties of the cements.

The following table shows a comparison between the mechanical properties of different Portland cements, in which their composition is 50% Portland clinker and the other 50% is either slag or the vitreous material object of the present patent application. The conditions for preparing the cement are the same, specifically grinding both materials to a blaine of 4600 cm²/g. As regards the slag used for the comparison, slag which is currently used to manufacture cements has been used. Likewise, the table includes the chemical composition either of the vitreous material or of the slag.

The table also includes the vitreous phase percentage determined by diffraction and then the mechanical properties of the mortars based on 450 g of cement, plus 1450 g of sand and plus 225 g of water, these cements being made according to UNE-EN.96.1.

| | Chemical Composition of Hardening Vitreous Material (or slag) (%) | | | | | | | | | | Flexural strength (N/mm²) | | | Compressive strength (N/mm²) | | |
|---|---|---|---|---|---|---|---|---|---|---|---|---|---|---|---|---|
| Cement prepared with 50% Portland Clinker+50% of the slag detailed below. Both taken to Blaine of 4500 cm²/g | SiO₂ | Al₂O₃ | Fe₂O₃ | CaO | MgO | SO₃ | Na₂O | K₂O | TiO₂ | Vitreous Phase (%) | 2 days | 7 days | 28 days | 2 days | 7 days | 28 days |
| 50% Vitreous Material hardening properties (Ref A1) | 33.9 | 12.6 | 0.0 | 41.0 | 7.8 | 1.9 | 0.4 | 1.6 | 0.5 | 98 | 5.9 | 10.9 | 11.7 | 23.8 | 52.5 | 78.9 |
| 50% Vitreous Material hardening properties (Ref A2) | 32.4 | 10.9 | 0.4 | 44.5 | 9.3 | 0.0 | 0.7 | 0.9 | 0.3 | 97 | 4.9 | 9.5 | 10.8 | 23.6 | 49.3 | 76.1 |
| 50% Vitreous Material hardening properties (Ref A3) | 32.2 | 11.2 | 0.1 | 41.0 | 8.6 | 3.2 | 12 | 1.6 | 0.4 | 96 | 4.3 | 9.1 | 10.2 | 23.6 | 49.8 | 73.2 |
| 50% Vitreous Material hardening properties (Ref A4) | 32.4 | 11.8 | 0.3 | 44.0 | 9.0 | 0.0 | 0.7 | 0.9 | 0.4 | 92 | 4.9 | 9.2 | 11.1 | 23.2 | 44.5 | 69.4 |
| 50% Vitreous material hardening properties (Ref A5) | 31.8 | 12.3 | 0.5 | 39.9 | 6.9 | 4.1 | 0.7 | 0.9 | 0.4 | 94 | 5.0 | 9.6 | 11.5 | 23.1 | 45.1 | 68.7 |
| 50% Vitreous Material hardening properties (Ref A6) | 33.0 | 15.0 | 0.1 | 34.4 | 9.8 | 5.6 | 0.8 | 0.9 | 0.3 | 90 | 4.7 | 7.8 | 9.5 | 24.6 | 43.5 | 62.3 |
| 50% "Atlantica Edersa" slag used in the manufacture of cements | 35.2 | 13.3 | 0.5 | 41.9 | 7.5 | - | 0.2 | 0.3 | - | - | 4.6 | 8.4 | 10.0 | 19.0 | 41.0 | 59.8 |
| 50% "Wakonigg" slag used in the manufaclure of cements | 35.1 | 12.6 | 0.8 | 40.2 | 9.4 | 0.0 | 0.2 | 0.4 | - | - | 3.8 | 7.5 | 8.2 | 17.9 | 37.6 | 56.4 |
| 50% "Ensidesa" slag used in the manufacture of cements | 33.8 | 14.1 | 1.1 | 39.5 | 7.7 | 0.1 | 0.2 | 0.5 | - | - | 3.4 | 7.3 | 8.0 | 18.4 | 38.0 | 57.2 |
| 50% "Ecotrade" slag used in the manufacture of cerments | 35.2 | 9.4 | 1.9 | 40.6 | 10.6 | 0.1 | 0.4 | 0.7 | - | - | 3.8 | 7.2 | 8.7 | 18.1 | 34.8 | 54.2 |
| 50% "Atlantica finlandesa" slag used in the manufacture of cements | 31.9 | 9.7 | 2.5 | 40.4 | 10.1 | 0.3 | 0.4 | 0.8 | - | - | 3.9 | 7.5 | 8.7 | 17.9 | 35.2 | 54.1 |
| 50% "Atlantica Duisherg" slag used in the manufacture of cements | 36.7 | 11.5 | 05 | 42.8 | 7.3 | 0.2 | 0.2 | 0.5 | - | - | 3.7 | 7.2 | 8.5 | 17.6 | 34.3 | 56.5 |

Likewise, a second object of the present invention is a process for manufacturing vitreous material with hardening properties.

### Description of a Preferred Embodiment

As a preferred embodiment, the characteristics of a vitreous material with hardening properties for manufacturing white cement, resistant to sulfates (gypsiferous soil) and sea water, will be detailed below.

The chemical composition of the vitreous material is:

| | SiO₂ | Al₂O₃ | Fe₂O₃ | CaO | MgO | SO₃ | Na₂O | K₂O | TiO₂ |
|---|---|---|---|---|---|---|---|---|---|
| % | 33.85 | 12.60 | 0.02 | 41.00 | 7.80 | 1.90 | 0.40 | 1.80 | 0.48 |

| | Mn | Zn | Ti | Co | Cd | As | V | <1 | Cr | Pb | Cu | Hg |
|---|---|---|---|---|---|---|---|---|---|---|---|---|
| Mg/kg | <1 | <1 | <1 | <1 | <1 | <1 | <1 | Ni | <1 | <1 | <1 | <1 |

Likewise, the ratio between calcium oxide and magnesium oxide with silicon oxide is equal to 1.44 ((CaO+MgO)/SiO₂ = 1.44), i.e., greater than 0.9 as mentioned previously and within the ideal range between 1.3 and 1.6.

Two new cements have been prepared with this material which cannot be manufactured with the current state of the art:
- BL II/B-S 52.5 R cement, i.e., white Portland cement with slag of category 52.5 and with a high initial strength and
- BL III/B 42.5 N/SR cement, i.e. white cement resistant to sea water and to gypsiferous soil of resistant category 42.5.
Wherein;
BL: white cement
II: mixed Portland cement
S: Slag (substituted in this case with the hardening vitreous material object of this patent, improving the properties thereof)
B: % of slag (S), (21-35% for Type II and 66-80% for Type III)
R: Initial high strength
N: Normal strength
III: Cement with blast furnace slag (the slag being substituted in this case by the vitreous hardening material object of this patent, improving the properties thereof).

SR: resistant to sea water and to gypsiferous soil of resistant category.

The following tables show the good mechanical properties of the cements obtained using the vitreous material object of the present invention.

| | BL II/B-S 52.5 R (Core composition 75% White Portland Clinker + 25% Vitreous Material) | |
|---|---|---|
| | Flexural strength (N/mm²) | Compressive strength (N/mm²) |
| 2 days | 4.7 | 40.4 |
| 28 days | 10.4 | 68.6 |

| | BL III/B-S 42.5 N/SR (Core composition 25% White Portland Clinker + 75% Vitreous Material) | |
|---|---|---|
| | Flexural strength (N/mm²) | Compressive strength (N/mm²) |
| 2 days | 4.2 | 32.9 |
| 28 days | 9.8 | 59.3 |

It is currently not possible to manufacture these cements, i.e. white cements resistant to gypsiferous soil or to sea water cannot be manufactured, but this drawback is solved with the products object of this patent.

It is also possible to obtain vitreous materials with hardening properties for manufacturing colored cements. It is thus possible to move through the coordinates of the CIELab System by adding small amounts of oxides with chromophore capacity such as those of the attached table, which provide the fundamental colors, to the raw materials, and by means of different mixtures, thus obtaining different vitreous materials with hardening properties and with the desired color characteristics.

| **Colors** | | **Nature of the** | **pigments used** |
|---|---|---|---|
| **Names** | **Mean (nanometers)** | **Names** | **Formulas** |
| Red | 680 | Ferric oxide Red ochre | αFe₂O₃ (colored earth) |
| Brown (Tan) | 630 | Ferric oxide Sienna Burnt Umber | AFe₂O₃ + αFeOOH (colored earth) |
| Yellow | 570 | Iron hydroxide Barium chromate Yellow ochre | αFeOOH BaCrO₄ (colored earth) |
| Green | 530 | Hydrated chromium oxide Chromium oxide Verona earth | CrOOH αCr₂O₃ (colored earth) |
| Blue | 470 | Cobalt oxide Cobalt blue | Co₂O₃ CoOAl₂O₃ |
| Violet | 420 | Manganese violet Ultramarine violet | |
| White | | Titanium dioxide | TiO₂ Lime, white cement Ground limestone |
| Black | | Iron oxide | Fe₂O₃ FeO Magnetic oxide Manganese oxide |

It is thus possible to obtain vitreous materials with hardening properties which will provide a specific color to the cement to be manufactured, for example:
- 1% of copper sulfate in the vitreous material composition will provide a green shade to the manufactured cement,
- 0.5% of copper sulfate in the vitreous material composition will provide a light green shade to the manufactured cement,
- 1% of manganese sulfate in the vitreous material composition will provide a dark brown shade to the manufactured cement,
- 0.5% of manganese sulfate in the vitreous material composition will provide a light brown shade to the manufactured cement, and
- 1% of chromium III oxide in the vitreous material composition will provide a yellowish shade to the manufactured cement.

## Claims

1. A vitreous material with hardening properties for manufacturing construction cements, **characterized in that** at least 70% of its composition is formed by CaO, MgO, SiO₂ and Al₂O₃.

2. A vitreous material according to claim 1, **characterized in that** the remaining components forming it are SO₃, Na₂O, K₂O, Fe₂O₃, and small amounts of other elements.

3. A vitreous material according to the previous claims, **characterized in that** the ratio between the components (CaO+MgO)/SiO₂ is greater than 0.9.

4. A vitreous material according to claim 3, **characterized in that** said ratio ranges between 1.3 and 1.6.

5. A vitreous material according to claim 1, **characterized in that** the content of Al₂O₃ is greater than 2%.

6. A vitreous material according to claim 1, **characterized in that** the content of Na₂O equivalent, Na₂O+0.658*K₂O, is less than 8%.

7. A vitreous material according to claim 1, **characterized in that** the content of SO₃ is less than 20%.

8. A vitreous material according to claim 1, **characterized in that** the vitreous phase is greater than 65%.

9. A vitreous material according to claim 8, **characterized in that** the vitreous phase is greater than 90%.

10. A process for manufacturing vitreous material with hardening properties, **characterized in that** it comprises the following steps:
- mixing and grinding the raw materials, at least 70% of the latter being Ca, Mg, Si and A1,
- introducing said raw materials in a furnace,
- completely melting the raw materials at temperatures between 1250 and 1600°C in slightly reducing or oxidizing conditions, and
- quickly cooling until a temperature less than 400°C, specifically until the vitrification of the raw materials at a rate between 40°C/minute and 80°C/minute.

11. A process according to claim 10, **characterized in that** the cooling is carried out with water.
